(19) Europäisches Patentamt
European Patent Office
Office européen des brevets

(11) EP 4 249 937 A1

(12) EUROPEAN PATENT APPLICATION
published in accordance with Art. 153(4) EPC

(43) Date of publication:
27.09.2023 Bulletin 2023/39

(51) International Patent Classification (IPC):
G01S 5/02 (2010.01)

(21) Application number: 21894884.2

(52) Cooperative Patent Classification (CPC):
G01S 5/02; G01S 5/0264

(22) Date of filing: 08.10.2021

(86) International application number:
PCT/KR2021/013894

(87) International publication number:
WO 2022/108112 (27.05.2022 Gazette 2022/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.11.2020 KR 20200155821

(71) Applicant: Vestellalab Inc.
Seoul 04147 (KR)

(72) Inventors:
• JUNG, Sangsu
Uiwang-si, Gyeonggi-do 16025 (KR)
• LEE, Eunjung
Uiwang-si, Gyeonggi-do 16025 (KR)
• LEE, Young Soo
Gunpo-si, Gyeonggi-do 15856 (KR)
• SINGH, Dhananjay
Yongin-si, Gyeonggi-do 17035 (KR)

(74) Representative: Frenkel, Matthias Alexander
Wuesthoff & Wuesthoff
Patentanwälte PartG mbB
Schweigerstraße 2
81541 München (DE)

(54) METHOD AND APPARATUS FOR INDOOR POSITIONING

(57) An indoor positioning method includes: setting node data including information about a position of a positioning sensor according to a rule preset on a movement path on which a moving object is movable with respect to an indoor space; obtaining first positioning data for determining a first section, in which the moving object is currently located, by using at least one of the node data, first sensing data obtained through a sensor unit provided in the moving object, and second sensing data obtained through a positioning sensor provided in the indoor space; determining whether the first positioning data satisfies a preset reference value for a boundary node defining the first section; and determining positioning data subsequent to the first positioning data, based on at least one of the node data, whether the first positioning data satisfies the preset reference value, and whether the moving object rotates at the boundary node.

FIG. 9

EP 4 249 937 A1

**Description**

Technical Field

The present disclosure relates to an indoor positioning method and device.

Background Art

In general, a position may be determined using a global positioning system (GPS) signal outdoors. In an outdoor environment, the influence of structures or obstacles that interfere with signal transmission and reception is relatively small, and the error in signal transmission and reception is relatively not large. However, in indoor positioning, there is a problem in that positioning accuracy is lowered due to GPS signal reception failures or errors caused by structures, such as ceilings, walls, and pillars.

As a positioning method developed in response to this, there have been attempts such as trilateration or fingerprint methods using positioning sensors such as beacons and Wi-Fi, camera techniques, and the like. However, there is a limit to improving the accuracy of positioning due to an error generated by a signal of the positioning sensor and surrounding environment.

Disclosure

Technical problem

Embodiments of the present disclosure are intended to provide an indoor positioning method and device with improved accuracy.

Technical Solution

An indoor positioning method according to an embodiment of the present invention includes: setting node data including information about a position of a positioning sensor, according to a preset rule, on a movement path on which a moving object is movable with respect to an indoor space; obtaining first positioning data for determining a first section, in which the moving object is currently located, by using at least one of the node data, first sensing data obtained through a sensor unit provided in the moving object, and second sensing data obtained through a positioning sensor provided in the indoor space; determining whether the first positioning data satisfies a preset reference value for a boundary node defining the first section; and determining positioning data subsequent to the first positioning data, based on at least one of the node data, whether the first positioning data satisfies the preset reference value, and whether the moving object rotates at the boundary node.

When it is determined that the first positioning data does not satisfy the preset reference value, the determining of the subsequent positioning data may include calculating second positioning data regarding a position between the boundary nodes by calculating a boundary coordinate value of boundary node data of the node data and a intensity of the second sensing data, wherein the intensity of the second sensing data corresponds to signal strength of the positioning sensor.

When it is determined that the first positioning data satisfies the preset reference value, or when it is determined that the boundary node is a rotation node based on the node data, the determining of the subsequent positioning data may include: determining rotation information about whether the moving object rotates at the boundary node and the direction of the rotation at the boundary node, based on at least one of the node data and direction data calculated based on the first sensing data; and calculating the subsequent positioning data for a section subsequent to the first section on a movement path of the moving object according to a result of the determination.

The determining of the rotation information may include: calculating first direction data about a rotation amount of the moving object by using the first sensing data; and determining second direction data about the rotation direction by associating the first direction data with the node data, wherein the first direction data may be calculated by performing a fusion operation on a first-first coordinate value of first-first sensing data and a first-second coordinate value of first-second sensing data.

When it is determined that the first positioning data satisfies the preset reference value, and when it is determined that the boundary node is not a rotation node, the determining of the subsequent positioning data may further include: updating the first positioning data with boundary node data of any one of the boundary nodes; and obtaining third-first positioning data for a second section on an extension line in an existing traveling direction of the moving object, wherein the second section may be a section adjacent to the first section.

When it is determined that a boundary node of the first section does not satisfy the reference value, when it is determined that a node satisfying the reference value is another node other than the boundary node of the first section, and when it is determined that the other node is not a rotation node, the determining of the subsequent positioning data may further include: updating the first positioning data with the other node data; and obtaining third-second positioning data for a third section on an extension line in an existing traveling direction of the moving object, wherein the other node may be a boundary node of the third section.

When it is determined that the moving object rotates in the determining of the rotation information, the determining of the subsequent positioning data may further include: determining a proximity positioning sensor by using the second sensing data; and obtaining fourth positioning data for a changed path in a direction different from the existing traveling direction of the moving object according to a position of the proximity positioning sensor.

The fourth positioning data may include: fourth-first positioning data obtained in a section that is changed according to the second direction data when the proximity positioning sensor is located in the existing traveling direction; fourth-second positioning data obtained between a node of the proximity positioning sensor and a node adjacent to the node of the proximity positioning sensor when the proximity positioning sensor is located in the changed section; and fourth-third positioning data obtained in a section that is changed at a node closest to the existing travelling direction when the proximity positioning sensor is not located in either of the existing travelling direction and the changed section.

An indoor positioning device according to an embodiment of the present disclosure includes: a control unit; and a sensor unit, wherein the control unit sets node data including information about a position of a positioning sensor according to a rule preset on a movement path on which a moving object is movable with respect to an indoor space, obtains first positioning data for determining a first section, in which the moving object is currently located, by using at least one of the node data, first sensing data obtained through the sensor unit, and second sensing data obtained through a positioning sensor provided in the indoor space, determines whether the first positioning data satisfies a preset reference value for a boundary node defining the first section, and determines positioning data subsequent to the first positioning data, based on at least one of the node data, whether the first positioning data satisfies the preset reference value, and whether the moving object rotates at the boundary node.

When the control unit determines that the first positioning data does not satisfy the preset reference value, the control unit may calculate second positioning data regarding a position between the boundary nodes by calculating a boundary coordinate value of boundary node data of the node data and the intensity of the second sensing data, wherein the intensity of the second sensing data may correspond to signal strength of the positioning sensor.

When the control unit determines that the first positioning data satisfies the preset reference value, or determines that the boundary node is a rotation node based on the node data, the control unit may determine rotation information about whether the moving object rotates at the boundary node and the direction of the rotation at the boundary node, based on at least one of the node data and direction data calculated based on the first sensing data, and calculate the subsequent positioning data for a section subsequent to the first section on a movement path of the moving object according to a result of the determination.

The control unit may calculate first direction data about a rotation amount of the moving object by using the first sensing data and determine second direction data about the rotation direction by associating the first direction data with the node data and determine the rotation information, wherein the first direction data may be calculated by performing a fusion operation on a first-first coordinate value of first-first sensing data and a first-second coordinate value of first-second sensing data.

When the control unit determines that the first positioning data satisfies the preset reference value, and determines that the boundary node is not a rotation node, the control unit may update the first positioning data with boundary node data of any one of the boundary nodes and obtain third-first positioning data for a second section on an extension line in an existing traveling direction of the moving object, wherein the second section may be a section adjacent to the first section.

When the control unit determines that a boundary node of the first section does not satisfy the reference value, determines that a node satisfying the reference value is another node other than the boundary node of the first section, and determines that the other node is not a rotation node, the control unit may update the first positioning data with the other node data and obtain third-second positioning data for a third section on an extension line in an existing traveling direction of the moving object, wherein the other node may be a boundary node of the third section.

When the control unit determines that the moving object rotates when determining the rotation information, the control unit may determine a proximity positioning sensor by using the second sensing data and obtain fourth positioning data for a changed path in a direction different from the existing traveling direction of the moving object according to a position of the proximity positioning sensor.

The fourth positioning data may include: fourth-first positioning data obtained in a section that is changed according to the second direction data when the proximity positioning sensor is located in the existing traveling direction; fourth-second positioning data obtained between a node of the proximity positioning sensor and a node adjacent to the node of the proximity positioning sensor when the proximity positioning sensor is located in the changed section; and fourth-third positioning data obtained in a section that is changed at a node closest to the existing travelling direction when the proximity positioning sensor is not located in either of the existing travelling direction and the changed section.

Advantageous Effects

According to embodiments of the present disclosure, an indoor positioning method and device with improved accuracy may be provided by using a positioning algorithm using node data in a movable path.

Description of Drawings

FIG. 1 is a diagram schematically illustrating the configuration of an indoor positioning system according to an embodiment of the present disclosure.
FIG. 2 is a configuration diagram illustrating, in more detail, an indoor positioning system according to an embodiment of the present disclosure.
FIG. 3 is a configuration diagram illustrating the configuration of a sensor unit according to an embodiment of the present disclosure.
FIG. 4 is a diagram for explaining node data according to an embodiment of the present disclosure.
FIG. 5 is a diagram for explaining a single path positioning method according to an embodiment of the present disclosure.
FIG. 6 is a diagram for explaining a single path positioning method according to another embodiment of the present disclosure.
FIG. 7 is a diagram for explaining a single path positioning method according to another embodiment of the present disclosure.
FIG. 8 is a diagram for explaining a multi-path positioning method according to an embodiment of the present disclosure.
FIG. 9 is a flowchart illustrating an indoor positioning method according to an embodiment of the present disclosure.
FIG. 10 is a flowchart illustrating in more detail an operation of determining subsequent positioning data as a part of the indoor positioning method according to an embodiment of the present disclosure.
FIG. 11 is a flowchart illustrating an operation of determining rotation information of a moving object, according to an embodiment of the present disclosure.
FIG. 12 is a flowchart illustrating in more detail some operations of a multi-path positioning method according to an embodiment of the present disclosure.

Mode for Invention

Because various changes can be applied to the present disclosure and the present disclosure can have various embodiments, particular embodiments are illustrated in the drawings and described in detail. Effects and features of the present disclosure and methods of securing them may be apparent with reference to the embodiments described below in detail with reference to the drawings. However, the present disclosure is not limited to the embodiments disclosed below, but may be implemented in various forms.
Hereinafter, embodiments of the present disclosure are described in detail with reference to the accompanying drawings, and when described with reference to the drawings, the same or corresponding components are given the same reference numerals, and duplicate descriptions thereof are omitted.
It will be understood that although the terms "first," "second," etc. may be used herein to describe various components, these components should not be limited by these terms. These components are only used to distinguish one component from another. In addition, singular expressions include plural expressions unless they are explicitly and differently specified in context. In addition, it will be further understood that the terms "includes or comprises" and/or "including or comprising" used in the present disclosure specify the presence of stated features or components, but do not preclude the presence or addition of one or more other components or features. Intensity of components in the drawings may be exaggerated or reduced for convenience of explanation. For example, because intensity and thicknesses of components in the drawings are arbitrarily illustrated for convenience of explanation, the present disclosure is not limited thereto.

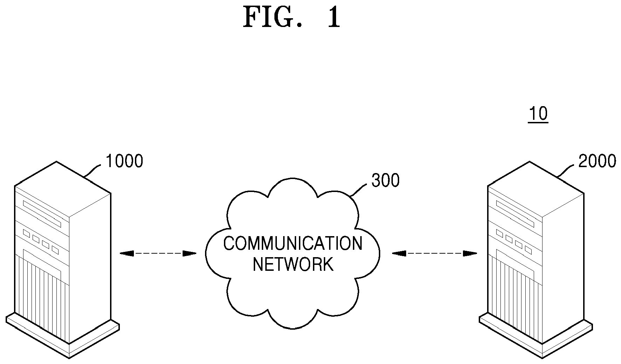

FIG. 1 is a diagram schematically illustrating the configuration of an indoor positioning system 10 according to an embodiment of the present disclosure.
The indoor positioning system 10 according to an embodiment of the present disclosure may include an indoor positioning server 1000 and an indoor space server 2000. The two servers, that is, the indoor positioning server 1000 and the indoor space server 2000, may communicate with each other through a communication network 300 and may exchange data with each other.

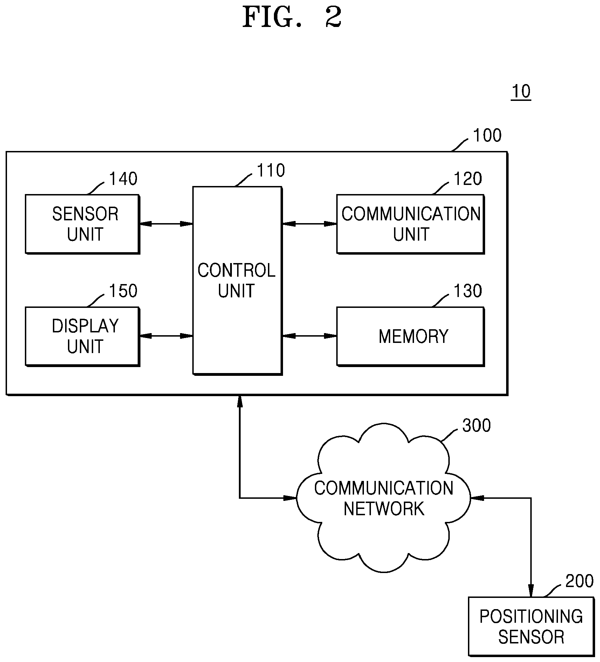

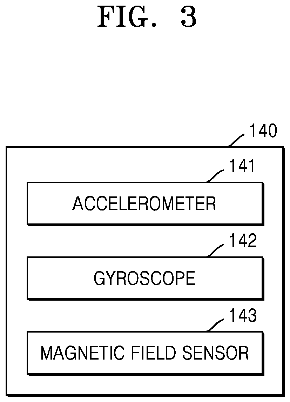

The indoor positioning server 1000 may perform indoor positioning of a moving object moving in an indoor space. To this end, the indoor positioning server 1000 may include an indoor positioning device 100 shown in FIGS. 2 and 3, which will be described in detail with reference to FIGS. 2 and 3 to be described below. The indoor positioning server 1000 may be a server that manages a positioning application installed in the indoor positioning device 100. The indoor positioning server 1000 and the indoor positioning device 100 may exchange data with each other through the application.

The indoor space server 2000 is a server related to an indoor space in which a moving object to be positioned moves. The indoor space of the present disclosure may be various spaces having obstacles to receiving GPS signals, such as indoor/underground parking lots, tunnels, underground roads, underground shopping malls, and inside buildings. The indoor space server 2000 may be a local server existing in each individual indoor space or a central server that manages information on several indoor spaces. Hereinafter, for example, it may be described that the indoor space is an indoor parking lot and the indoor space server 2000 is a parking lot server. The indoor space server 2000 may include a positioning sensor 200 as shown in FIG. 2 for indoor positioning of a moving object.

According to embodiments, the operating subject of the indoor positioning server 1000 may be the same as that of the indoor space server 2000.

The communication network 300 may refer to a communication network that mediates data transmission and reception between components of the indoor positioning system 10. Examples of the communication network 300 may include wired networks, such as local area networks (LANs), wide area networks (WANs), metropolitan area networks (MANs), and integrated service digital networks (ISDNs), or wireless networks, such as Wi-Fi, wireless LANs, CDMA, Bluetooth, and satellite communication. However, the scope of the present disclosure is not limited thereto.

Hereinafter, the configuration of the indoor positioning system 10 according to an embodiment will be described in more detail with reference to both FIG. 2 and FIG. 3.

FIG. 2 is a configuration diagram illustrating, in more detail, an indoor positioning system 10 according to an embodiment of the present disclosure, and FIG. 3 is a configuration diagram illustrating the configuration of a sensor unit according to an embodiment of the present disclosure.

The indoor positioning device 100 is a device corresponding to a moving object such as a vehicle, and may be a mobile terminal such as a mobile phone or a tablet PC owned by the owner of the vehicle, or an electronic device connected to or built into the vehicle. An application for performing an indoor positioning method for a moving object according to an embodiment of the present disclosure may be installed in the indoor positioning device 100. Hereinafter, the concept of the position of the moving object and the concept of the position of the indoor positioning device 100 may be used interchangeably for description.

The indoor positioning device 100 may include a control unit 110, a communication unit 120, a memory 130, a sensor unit 140, and a display unit 150. In addition, although not shown in the drawings, the indoor positioning device 100 may further include an input/output interface other than the display unit 150.

The control unit 110 may perform an operation of overall controlling the indoor positioning device 100. A specific operation of the control unit 110 will be described in more detail with reference to related drawings to be described below.

The control unit 110 may include all types of devices capable of processing data, such as a processor. Here, 'processor' may refer to, for example, a data processing device embedded in hardware, which has a physically structured circuit to perform functions expressed by codes or instructions included in a program. Examples of the data processing device embedded in hardware may include a microprocessor, a central processing unit (CPU), a processor core, a multiprocessor, an application-specific integrated circuit (ASIC), and a field programmable gate array (FPGA). However, the scope of the present disclosure is not limited thereto.

The communication unit 120 may be a device including hardware and software necessary for transmitting and receiving control signals or data through the communication network 300 according to various types of communication methods. The communication unit 120 may communicate with various types of external devices and servers, such as the positioning sensor 200 of FIG. 2 or the indoor space server 2000.

The memory 130 temporarily and/or permanently stores all types of data generated and processed by the indoor positioning device 100. The memory 130 may store program applications installed in the indoor positioning device 100, data, commands, etc. and may store all types of data input and output through the indoor positioning device 100. The memory 130 may include a permanent mass storage device, such as a random access memory (RAM), a read only memory (ROM), or a disk drive, a flash storage medium, a solid state drive (SSD), or the like. However, the scope of the present disclosure is not limited thereto.

Here, the sensor unit 140 will be described with reference to FIG. 3 in addition to FIG. 2. The sensor unit 140 is a sensor for obtaining movement information including the position of a moving object, whether or not the moving object has moved, the movement direction/angle of the moving object, and the posture of the moving object, and may include a plurality of sensors for sensing an internal or external state of the indoor positioning device 100. The sensor unit 140 may include at least one of an accelerometer 141, a gyroscope 142, and a magnetic field sensor 143. First sensing data about the movement information of a moving object may be obtained through the sensor unit 140.

The accelerometer 141 senses the acceleration of a moving object and may be a three-axis sensor of X-axis, Y-axis, and -axis. The gyroscope 142 senses the angular velocity of a moving object and may be a three-axis sensor of Rx, Ry, and Rz. The accelerometer 141 may measure the movement inertia (g ($1g = 9.8$ m/s$^2$) as an example of the unit thereof) of a moving object using the acceleration of the moving object, and the gyroscope 142 may measure the rotational inertia and/or rotation rate (deg/sec as an example of the unit thereof) using the angular velocity of the moving object. For example, the control unit 110 may obtain the movement information of a moving object by using sensed values of the accelerometer 141 and the gyroscope 142, and the movement information may include rotation information (angular change amount) including information about a roll angle, a pitch angle, and a yaw angle of a moving object, and speed information.

The magnetic field sensor 143 may measure the azimuth of a moving object. The range of variation of a sensed value obtained by the magnetic field sensor 143 decreases when the moving object is stationary without moving. When the change value of an outputted sensed value is equal to or less than a preset criterion, it may be determined that the vehicle is in a stationary state. The control unit 110 may reduce an error when determining whether a moving object moves or rotates by using a sensed value of the magnetic field sensor 143 in addition to sensed values of the accelerometer 141 and the gyroscope 142. In this way, the indoor positioning device 100 may determine motion and speed information of a moving object in various directions in three dimensions including three axes of the moving object based on the first sensing data obtained through the sensor unit 140.

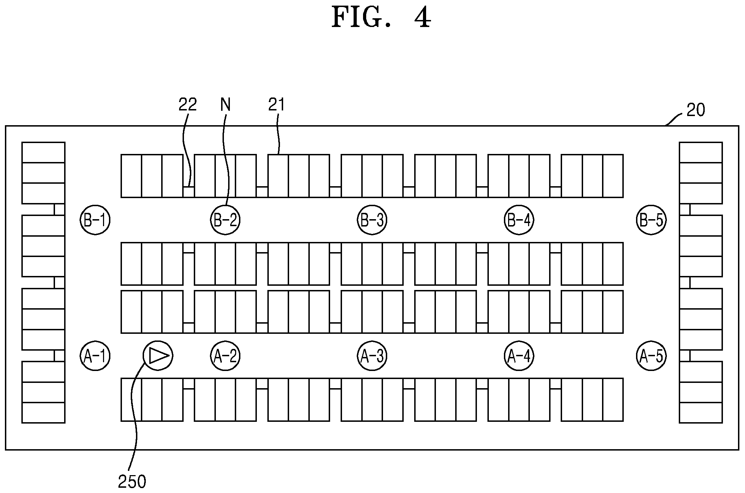

Referring back to FIG. 2, the display unit 150 may display data input and output through the indoor positioning device 100. Positioning data processed and output by an indoor positioning method according to an embodiment of the present disclosure may be displayed through the display unit 150 in an output method according to the operation of a positioning application stored in the indoor positioning device 100. FIGS. 4 to 8 to be described below are examples of display screens output through the display unit 150.

According to embodiments, the indoor positioning device 100 may be provided separately from the indoor positioning server 1000 outside the indoor positioning server 1000.

The indoor space server 2000 may include the positioning sensor 200 installed in an indoor space for indoor positioning of a moving object. For example, the positioning sensor 200 may be a beacon module that transmits a beacon signal including a beacon ID through the communication network 300. The beacon signal may include a universally unique identifier (UUID), a major ID, a minor ID, and a received signal strength indication (RSSI). For example, the major ID and the minor ID may consist of three digit numbers, and a unique number for each floor may be assigned to the hundreds' digit and a unique number for each beacon may be assigned to the tens' digit and the ones' digit. The RSSI corresponds to the strength of the beacon signal. In this case, the positioning sensor 200 may periodically wirelessly transmit the beacon signal to the indoor positioning server 1000 through all available wireless communication networks 300 such as Wi-Fi, Bluetooth, Zigbee, Long Term Evolution (LTE), and 3G.

Hereinafter, data obtained by the positioning sensor 200 is referred to as second sensing data, and the second sensing data may refer to the beacon signal.

FIG. 4 is a diagram for explaining node data according to an embodiment of the present disclosure, and is an example of a display screen displayed through the display unit 150.

On the display screen, an indoor space 20, a parking surface 21, an obstacle 22, and the like are shown in the form of data-processed images, and the parking surface 21 and the obstacle 22 may be appropriately disposed in the actual indoor space 20. Hereinafter, the indoor space 20 is described as an example of a parking lot.

The control unit 110 sets node data including information about the position of the positioning sensor 200, according to a preset rule, on a movement path through which a moving object is movable with respect to the indoor space 20.

In the indoor space 20, the rest of the space excluding the parking surface 21 and the obstacle 22 may be a movement path through which a moving object is movable. A plurality of nodes N indicating the position of the positioning sensor 200 (refer to FIG. 2) installed according to a preset rule are shown on the movement path. Hereinafter, the 'position of the node N' and the 'position of the positioning sensor 200' may be used interchangeably for description. Positioning sensors 200 may be installed at regular intervals according to a preset rule on a movement path. Nodes may also be set on the parking surface 21 according to an embodiment.

For example, in FIG. 4, the plurality of nodes N include nodes A on a first movement path and nodes B on a second movement path, and the nodes A include nodes A-1, A-2, A-3, A-4, and A-5 and the nodes B include nodes B-1, B-2, B-3, B-4, and B-5. However, the position and number of the plurality of nodes N are not limited thereto.

Node data according to an embodiment of the present disclosure relates to information about a position in which the positioning sensor 200 is installed, and the position information may include an ID of the positioning sensor 200, information about the position of each of the plurality of nodes N, and information about connection between different nodes.

The plurality of nodes N may include a first node where a positioning operation starts, a final node where the positioning operation ends, a rotation node located at an intersection such as a three-way intersection or a crossroads, and an intermediate node located between the nodes. For example, the first node may correspond to an entrance of an indoor space, and the final node may correspond to an exit of the indoor space. In FIG. 4 , the node A-1 may be a first node, the node B-1 may be a final node, the nodes A-5 and B-5 may be rotation nodes, and other nodes may be intermediate nodes. In this way, the positioning sensor 200 may be installed on a straight path of a moving object or a point where the direction of the moving object is changed, such as an intersection. In this case, when the distance between two adjacent positioning sensors 200 on the straight path is greater than a certain criterion, an additional positioning sensor 200 may be installed between the two adjacent positioning sensors 200 to increase the accuracy of positioning.

The control unit 110 may use at least one of the node data, the first sensing data obtained through the sensor unit 140, and the second sensing data obtained through the positioning sensor 200 provided in the indoor space 20 and obtain first positioning data for determining a first section in which the moving object is currently located. For example, the first positioning data may include current position coordinates as the current position of the moving object (at the starting point of a positioning operation), information about the distance between the indoor positioning device 100 and the positioning sensor 200, and the like.

Thereafter, the control unit 110 may determine whether the first positioning data satisfies a preset reference value for a boundary node defining the first section. For example, when the first section is a section between the node A-2 and the node A-3 in FIG. 4, the two nodes A-2 and A-3 are boundary nodes of the first section. For example, whether the first positioning data satisfies the reference value may be determined based on whether a calculated distance between the positioning sensor 200 and the indoor positioning device 100 is equal to or less than a certain value, that is, whether the moving object approaches a specific positioning sensor 200 within a certain distance. If it is determined that the first positioning data satisfies the reference value, a next positioning operation (by a next positioning sensor 200) may be performed. According to an embodiment, a condition for satisfying the reference value may be how continuously and how frequently the indoor positioning device 100 receives sensor signals from the various positioning sensors 200, and may be changed within various ranges that facilitate positioning. According to an embodiment, the condition for satisfying the reference value may be whether the indoor positioning device 100 and the various positioning sensors 200 are relatively close to each other by using the RSSI data, and this may be used together with the above-mentioned frequency.

Thereafter, the control unit 110 may determine positioning data subsequent to the first positioning data based on at least one of whether the first positioning data satisfies the reference value and whether a moving object rotates at the boundary node. A specific example of determining subsequent positioning data based on whether the first positioning data satisfies the reference value and whether a moving object rotates at the boundary node will be described with reference to drawings to be described below.

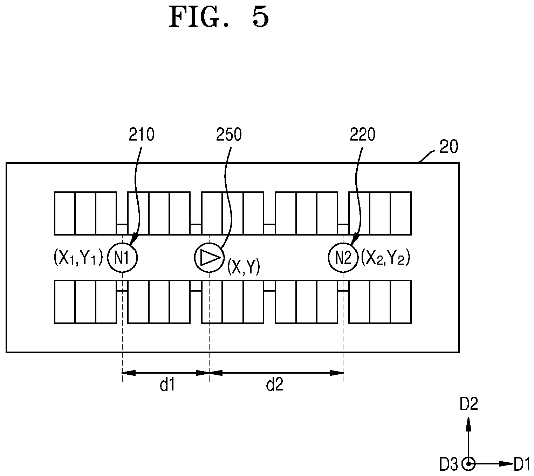

FIG. 5 is a diagram for explaining a single path positioning method according to an embodiment of the present disclosure, and relates to an embodiment of a case in which the control unit 110 determines that the first positioning data does not satisfy the reference value. The 'single path' (straight path) may refer to a movement path between two nodes N1 and N2.

The control unit 110 calculates second positioning data regarding a position between the boundary nodes by calculating a boundary coordinate value of boundary node data of the node data and the intensity of the second sensing data. The intensity of the second sensing data corresponds to the signal strength of the positioning sensor 200, and may be, for example, RSSI of a beacon signal. Specifically, the second positioning data may be calculated by performing an internal division point operation on the boundary coordinate value of the boundary node data and the intensity of the second sensing data.

Referring to FIG. 5, a first node N1, a second node N2, and a moving object moving between the first node N1 and the second node N2 (in a 'first section') is shown on a movement path. In this case, the moving object is illustrated as an UI object 250 displayed on the display screen, and the UI object 250 may be described as being identical to a moving object 250. The first node N1 is a position in which a first positioning sensor 210 is installed, and the second node N2 is a position in which a second positioning sensor 220 is installed. The first positioning data described above with reference to FIG. 5 refers to the current position coordinates (not shown) of the moving object 250, the boundary node data refers to the position coordinates ((X1, Y1) and (X2, Y2) of the two nodes N1 and N2, and the second positioning data refers to the subsequent position coordinates ((X, Y)) of the moving object 250 to be described below.

The control unit 110 may calculate the position of the moving object 250 on a straight path based on RSSI included in beacon signals transmitted from the first and second positioning sensors 210 and 220. Specifically, the control unit 110 may measure first distance information between the first and second positioning sensors 210 and 220 and the moving object 250 based on the RSSI, and may calculate second distance information between the two nodes N1 and N2 of the moving object 250 by using the first distance information and height information in a third direction D3 from the reference plane of an indoor space. That is, the second distance information includes a distance on a D1-D2 plane, and refers to a distance between a bottom projection point of the indoor space 20 of the positioning sensor 200 and the moving object 250. Hereinafter, the node N may be described as referring to a bottom projection point of the positioning sensor 200. The second distance information includes a distance between the moving object 250 and any one of the plurality of nodes N, and includes a first interval d1 that is the distance between the moving object 250 and the first node N1, and a second interval d2 that is the distance between the moving object 250 and the second node N2.

Specifically, the positioning of the moving object 250 between the two nodes N1 and N2 on the straight path, that is, the second positioning data may be calculated by the following equations.

[Equation 1]

$$X = X_2 + (X_1 - X_2) \times \frac{d2}{d1+d2}$$

[Equation 2]

$$Y = Y_2 + (Y_1 - Y_2) \times \frac{d2}{d1+d2}$$

According to the above equations, the second positioning data (subsequent position coordinates of the moving object 250) may be calculated through an internal division point operation based on the second distance information (i.e., the first and second interval d1 and d2) calculated based on the position coordinates of nodes and the signal strength of the positioning sensor 200.

As such, when the current position information (the first positioning data) of the moving object 250 does not satisfy a signal reference value for the boundary node N1 or N2 in the first section, the control unit 110 may determine that the moving object 250 moves between the two nodes N1 and N2, and may calculate a specific position of the moving object 250 in the first section by calculating subsequent position information (the second positioning data).

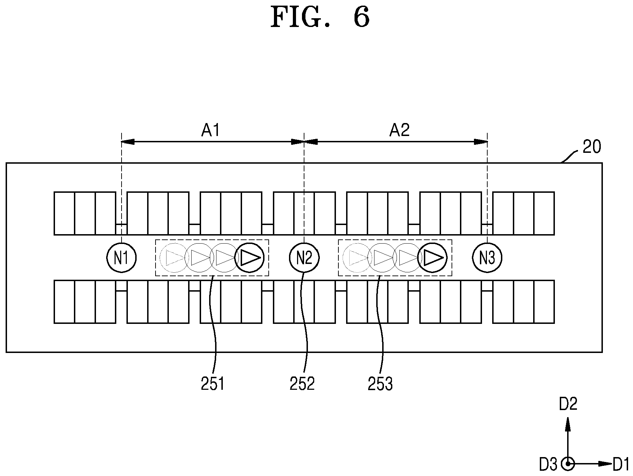

FIG. 6 is a diagram for explaining a single path positioning method according to another embodiment of the present disclosure, and relates to an embodiment of a case in which the control unit 110 determines that the first positioning data satisfies the reference value. In other words, FIG. 6 illustrates a case in which it is determined that a moving object approaches a boundary node N2 on one side of a first section A1. The 'single path' (straight path) may refer to a movement path on an extension line connecting three nodes N1, N2, and N3.

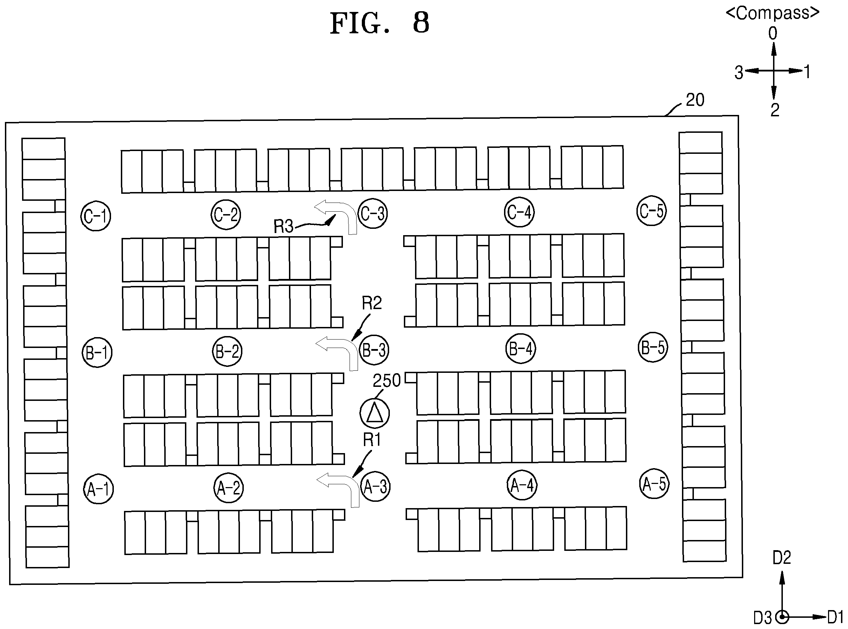

The control unit 110 may determine the type of a boundary node or rotation information about whether the moving object rotates at the boundary node and the direction of the rotation at the boundary node, based on at least one of node data and direction data calculated based on the first sensing data obtained by the sensor unit 140. In operation of determining the type of the boundary node by using the node data, it is possible to determine whether a corresponding boundary node is a node on a single path (straight path) or a rotation node on a multi-path by using, for example, a beacon signal assigned to each node. A detailed method of determining the rotation information will be described in detail with reference to FIG. 8 to be described below. Thereafter, the control unit 110 may calculate subsequent positioning data for a section A2 following the first section A1 on the movement path of the moving object according to the determination result.

For example, referring to FIG. 6, when the control unit 110 determines that the boundary node is a node on a single path or determines that the boundary node is not a rotation node based on the node data, the control unit 110 may update the first positioning data 251 described above into boundary node data of any one of the boundary nodes, that is, position data 252 of the second node N2 in FIG. 6. According to an embodiment, when the control unit 110 determines that the moving object does not rotate when determining the rotation information, for example, when the direction data is calculated to be the same as the existing direction data, the operation of FIG. 6 may be performed. Thereafter, the control unit 110 may obtain third-first positioning data 253 for the second section A2 on an extension line in the existing traveling direction of the moving object. In FIG. 6, the first positioning data 251 in the first section A1 and the third-first positioning data 253 in the second section A2 may include data regarding the position of the moving object that changes in real time.

In the embodiment of FIG. 6, the first section A1 and the second section A2 that is a subsequent section are adjacent to each other. Hereinafter, an embodiment in which the subsequent section is not adjacent to the first section A1 will be described.

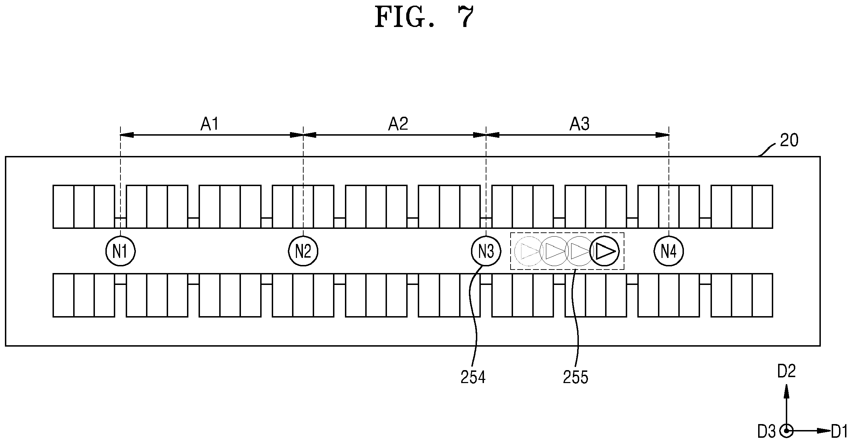

FIG. 7 is a diagram for explaining a single path positioning method according to another embodiment of the present disclosure, and descriptions will be made focusing on differences from FIG. 6.

While the moving object is moving in the first section A1 as described above, when a node that satisfies a reference value is determined, by the control unit 110, to be not the second node N2, which is a boundary node in the direction of travel, but a third node N3 next to the second node N2, the operation described above with reference to FIG. 6 may be performed in a third section A3 that is not adjacent to the first section A1. Specifically, when the control unit 110 determines that a boundary node of the first section A1 does not satisfy a reference value, determines that a node satisfying the reference value is another node other than the boundary node of the first section A1, and determines that the other node is not a rotation node, an operation in FIG. 7 may be performed. In this case, the other node refers to a boundary node of the third section A3.

For example, the control unit 110 may update the first positioning data to position data 254 of the other node, that is, the third node N3 in FIG. 3, and then may obtain third-second positioning data 255 for the third section A3.

In the above, the case where a node satisfying the reference value is located on a straight path of a moving object has been described as an example, but the node satisfying the reference value may be located on a path in a direction different from the direction of the straight path.

FIG. 8 is a diagram for explaining a multi-path positioning method according to an embodiment of the present disclosure, and is a display screen in which an indoor space 20 includes a plurality of rotation sections R1, R2, and R3. In the upper right corner of FIG. 8, a Compass variable is shown as second direction data to be described below.

The control unit 110 may calculate first direction data about the amount of rotation (i.e., a rotation amount) of a moving object by using the first sensing data.

The 'first direction data' may be calculated by performing a fusion operation on a first-first coordinate value of first-first sensing data and a first-second coordinate value of first-second sensing data. The first-first sensing data and the first-second sensing data are included in the first sensing data obtained by the sensor unit 140. The first-first sensing data is a sensing value obtained by the accelerometer 141, and the first-second sensing data is a sensing value obtained by the gyroscope 142. That is, a rotation amount and rotation direction of the moving object may be calculated using the sensing values of the accelerometer 141 and the gyroscope 142, which will be described in detail below.

The accelerometer 141 and the gyroscope 142 are three-axis sensors, and it is assumed that the first-first coordinate value and the first-second coordinate value are (acc(x), acc(y), acc(z)) and (gyr(x), gyr(y), gyr(z)), respectively. The 'first direction data' includes the following first change amount, second change amount, and third change amount. When a radian change amount per second is a first change amount $\Delta s1$, a degree change amount per second is a second change amount $\Delta s2$, and an actual degree change amount is a third change amount $\Delta s3$, the values of the first change amount $\Delta s1$, the second change amount $\Delta s2$, and the third change amount $\Delta s3$ are respectively obtained by Equations 3, 4, and 5 below.

[Equation 3]

$$\Delta s1 = \frac{acc(x) \times gyr(x) + acc(y) \times gyr(y) + acc(z) \times gyr(z)}{\sqrt{acc(x)^2 + acc(y)^2 + acc(z)^2}}$$

[Equation 4]

$$\Delta s2 = \frac{\Delta s1 \times 180}{\pi}$$

[Equation 5]

$$\Delta s3 = \frac{\Delta s2 \times (\text{TIME DIFFERENCE})}{1000}$$

In Equation 5, 1000 is a variable determined based on the value of time, and means that the unit of 1000 is seconds (sec). That is, referring to Equation 5, the third change amount $\Delta s3$, which is an actual change amount, may be obtained by integrating the second change amount $\Delta s2$. For example, because the second change amount $\Delta s2$ is not limited in range according to the rotation amount and the third change amount $\Delta s3$ is the actual change amount at a point in time, a degree value obtained by accumulating the third change amount $\Delta s3$ may have a value within the range of 0 degrees to 360 degrees. For example, when the moving object rotates and the degree value obtained by accumulating the third change amount $\Delta s3$ is a value greater than 360 degrees, the degree value may be changed to 0 degrees again, and when the degree value obtained by accumulating the third change amount $\Delta s3$ is a value less than 0 degrees, the degree value may be changed to 360 degrees again.

Thereafter, the control unit 110 may determine the rotation information by associating the above-described first direction data to the node data to determine second direction data related to the rotation direction. In this case, as an example of the second direction data, descriptions will be made with reference to the Compass variable shown in the upper right corner of FIG. 8.

In FIG. 8, the Compass variable is set, for example, to have four values of East, West, South, and North (values of 1, 2, and 3 in a clockwise direction from 0) by considering the node data on the movement path that is a travelling path of the moving object. For example, assuming that $0<a<90$ (degrees), the control unit 110 may determine the second direction data as 0 when the degree value obtained by accumulating the third change amount $\Delta s3$ is greater than or equal to $(360-a)$ degrees and less than or equal to $(360+a)$ degrees, determine the second direction data as 1 when the degree value obtained by accumulating the third change amount $\Delta s3$ is greater than or equal to $(90-a)$ degrees and less than or equal to $(90+a)$ degrees, determine the second direction data as 2 when the degree value obtained by accumulating the third change amount $\Delta s3$ is greater than or equal to $(180-a)$ degrees and less than or equal to $(180+a)$ degrees, and determine the second direction data as 3 when the degree value obtained by accumulating the third change amount $\Delta s3$ is greater than or equal to $(270-a)$ degrees and less than or equal to $(270+a)$ degrees.

In determining the rotation information, the types of the first direction data and the second direction data and the method of determining the first direction data and the second direction data are not limited to those described above.

Thereafter, when the control unit 110 determines that the moving object rotates when determining the rotation information based on the direction data, a proximity positioning sensor may be determined using the second sensing data.

For example, in FIG. 8, when the second direction data (Compass variable) is changed from 0 to 3, the control unit 110 may determine that the moving object rotates in any one of the plurality of rotation sections R1, R2, and R3. Then, a proximity positioning sensor of the moving object 250 is determined using the second sensing data of the positioning sensor 200 corresponding to each node of neighboring nodes of the moving object 250.

Thereafter, the control unit 110 may obtain fourth positioning data for a changed path in a direction different from an existing traveling direction D2 of the moving object according to the position of the proximity positioning sensor. The fourth positioning data may include fourth-first, fourth-second, and fourth-third positioning data to be described below according to the number of cases.

First, when the proximity positioning sensor is located in the existing traveling direction D2, that is, when a node corresponding to the proximity positioning sensor is any one of nodes A-3, B-3 and C-3 in FIG. 8, the control unit 110 may obtain the fourth-first positioning data in a section that is changed according to the second direction data (Compass variable: 3).

For example, in FIG. 3, if it is determined that the node of the proximity positioning sensor is the node B-3, the movement path may be changed in the second rotation section R2 formed at the node B-3 according to the second direction data (the Compass variable is changed from 0 to 3). Thereafter, single-path section positioning may be performed in a section between the node B-3 and a node B-2, which is a changed path. In other words, the first positioning data, which indicates the initial position of the moving object, may be replaced with rotation node data according to whether the reference value is satisfied and rotation information, and subsequent positioning data of a changed section on the changed path may be calculated.

Next, when the proximity positioning sensor is located in the changed section, the control unit 110 may obtain the fourth-second positioning data between the node of the proximity positioning sensor and a node adjacent thereto. In FIG. 8, when the proximity positioning sensor is any one of nodes A-2, B-2, and C-2 on a movement path in a first direction D1, the control unit 110 may change a path according to the second direction data changed at the rotation nodes A-3, B-3, and C-3 adjacent to the node of the proximity positioning sensor at one side of the proximity positioning sensor. Thereafter, the fourth-second positioning data may be calculated in a section between the node of the proximity positioning sensor and the nodes A-1, B-1, and C-1 adjacent to the node, at the other side of the proximity positioning sensor.

For example, in FIG. 8, if it is determined that the proximity positioning sensor is the node C-2, the movement path may be changed in the third rotation section R3 formed at the node C-3, and then the single-path section positioning described above may be performed between the node C-2 and the node C-1.

Next, in an exceptional case in which the proximity positioning sensor is not located in either the existing traveling direction D2 or the section (the first direction D1) on the changed path, the control unit 110 may change the movement path according to the second direction data changed at a node closest to the existing travelling direction D2. Thereafter, the fourth-third positioning data may be obtained in the section on the changed path.

For example, in FIG. 8, if it is determined that the proximity positioning sensor is any one of nodes A-4, B-4, C-4, A-5, B-5, and C-5 or another sensor not shown in FIG. 8, due to an operation error of the indoor positioning device 100 or the positioning sensor 200, the control unit 110 may change a path according to the second direction data changed at the closest rotation node on the current travelling path of the moving object, that is, the node B-3 in FIG. 8, and may calculate the fourth-third positioning data in a section (between the node B-3 and the node B-2 and between the node B-2 and the node B-1) on a changed path in the first direction D1.

The third positioning data and fourth positioning data described above may be calculated using the same principle as the second positioning data. The third positioning data refers to positioning data in a subsequent section on the single path. For example, the third positioning data may include the third-first positioning data 253 (see FIG. 6) and the third-second positioning data 255 (see FIG. 7).

If it is determined that the moving object does not rotate in a rotation section, the control unit 110 may perform the above-described single path positioning in the rotation section.

As described above, according to the indoor positioning method according to an embodiment of the present disclosure, indoor positioning with improved speed and accuracy may be performed through positioning algorithms of various cases using a movement path in which a moving object may move in an indoor space and node data preset in the movement path.

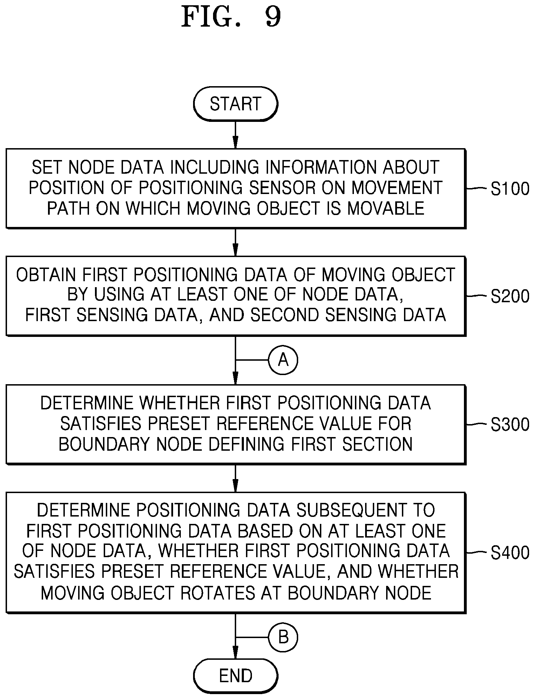

FIG. 9 is a flowchart illustrating an indoor positioning method according to an embodiment of the present disclosure. The indoor positioning method includes operations to be described below, and will be described with reference to the drawings described above.

Node data including information about the position of the positioning sensor 200 is set according to a preset rule on a movement path on which a moving object is movable with respect to the indoor space 20 (operation S100).

Thereafter, first positioning data for determining a first section, in which the moving object is currently located, is obtained by using at least one of the node data, first sensing data obtained through the sensor unit 140 provided in the moving object, and second sensing data obtained through the positioning sensor 200 provided in the indoor space 20 (operation S200).

It is determined whether the first positioning data satisfies a preset reference value for a boundary node defining the first section (operation S300).

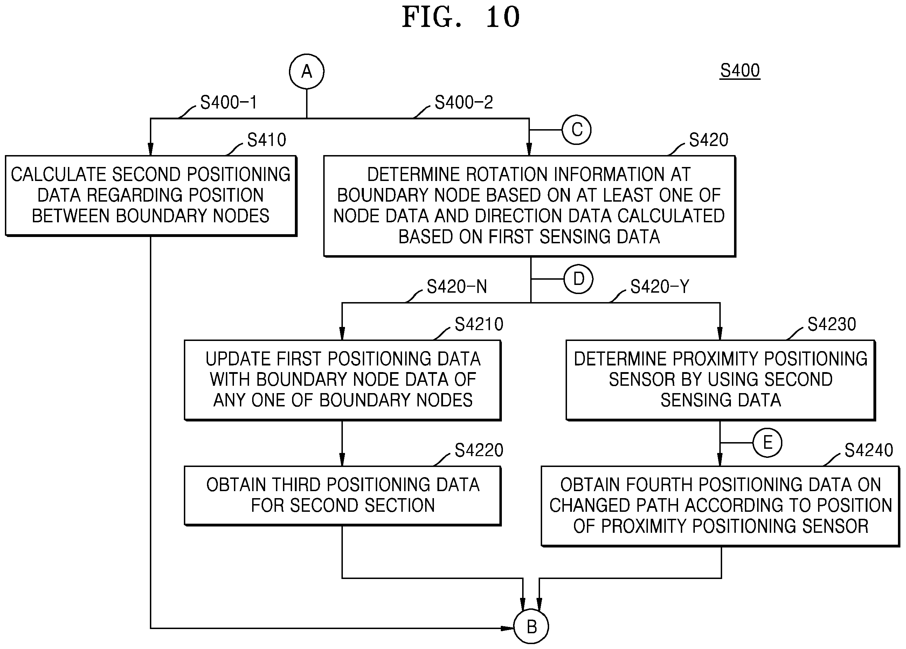

Thereafter, positioning data subsequent to the first positioning data may be determined based on at least one of the node data, whether the first positioning data satisfies the preset reference value, and whether the moving object rotates at the boundary node (operation 400). Operation S400 will be described in more detail with reference to FIGS. 10 to 12 to be described below.

Although it is shown in FIG. 9 that operation S400 is performed after operation S300, operation S300 and operation S400 may be performed in parallel.

In this case, the first sensing data may include information on the position, direction, angle, posture, etc. of the moving object itself, and the second sensing data may include signal strength (RSSI) as a beacon signal.

FIG. 10 is a flowchart illustrating in more detail operation S400 of determining subsequent positioning data as a part of the indoor positioning method according to an embodiment of the present disclosure. Operation S400 may include operations described below.

If it is determined in operation S300 that the first positioning data does not satisfy the preset reference value (operation S400-1), operation S400 of determining the subsequent positioning data may include operation S410 of calculating second positioning data regarding a position between the boundary nodes by calculating a boundary coordinate value of boundary node data of the node data and the intensity of the second sensing data. In this case, the intensity of the second sensing data may correspond to the signal strength of the positioning sensor 200. The second positioning data may be calculated by performing an internal division point operation on the boundary coordinate value of the boundary node data and the intensity of the second sensing data.

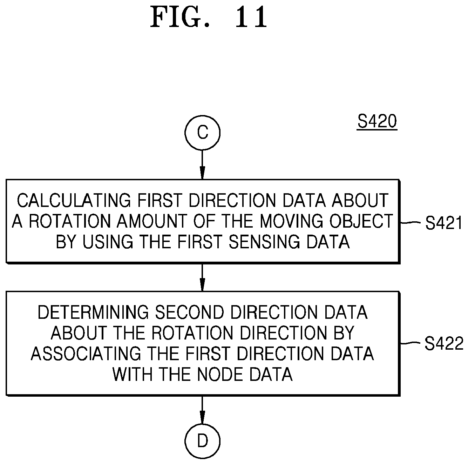

If it is determined in operation S300 that the first positioning data satisfies the preset reference value or if it is determined that the boundary node is a rotation node based on the node data (operation S400-2), rotation information about whether the moving object rotates at the boundary node and the direction of the rotation at the boundary node may be determined based on at least one of the node data and direction data calculated based on the first sensing data (operation S420). Operation S420 will be described in more detail with reference to FIG. 11 to be described below.

Thereafter, the subsequent positioning data for a section subsequent to the first section may be calculated on the movement path of the moving object according to a result of the determination (operations S4210, S4220, S4230, and S4240). Specifically, the subsequent positioning data may be calculated as follows.

If it is determined in operation S420 that the first positioning data satisfies a preset reference value and the boundary node is not a rotation node (operation S420-N), the first positioning data may be updated with boundary node data of any one of the boundary nodes (operation S4210), and third positioning data for a second section on an extension line in an existing traveling direction of the moving object may be obtained (operation S4220).

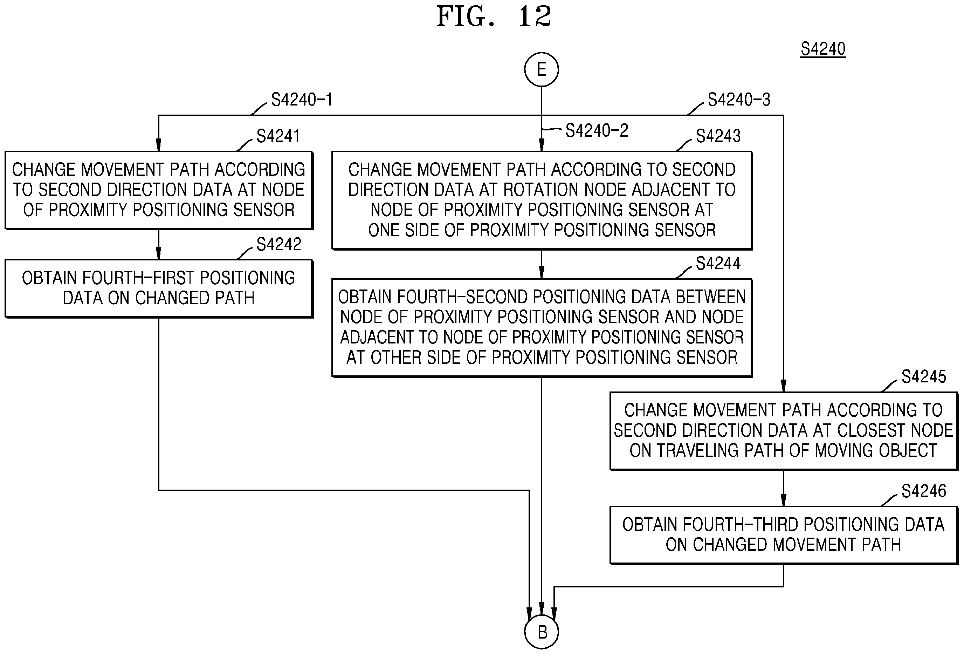

In contrast, if it is determined in operation S420 that the boundary node is a rotation node regardless of whether the first positioning data satisfies the reference value (operation S420-Y), a proximity positioning sensor may be determined by using the second sensing data (operation S4230), and fourth positioning data for a section on a changed path in a direction different from the existing traveling direction of the moving object may be obtained according to the position of the proximity positioning sensor (operation S4240). The number of cases of the fourth positioning data will be described in detail with reference to FIG. 12 to be described below.

The third positioning data and fourth positioning data described above may be calculated using the same principle as the second positioning data.

FIG. 11 is a flowchart illustrating operation S420 of determining rotation information of a moving object, according to an embodiment of the present disclosure. Operation S420 of determining rotation information may include operations to be described below.

First direction data about a rotation amount of the moving object is calculated using the first sensing data (operation S421). The first direction data may be calculated by performing a fusion operation on a first-first coordinate value of first-first sensing data obtained by the accelerometer 141 and a first-second coordinate value of first-second sensing data obtained by the gyroscope. Specifically, the first direction data may include first, second, and third change amounts respectively calculated through Equations 3, 4, and 5 described above.

Thereafter, second direction data about the rotation direction may be determined by associating the first direction data with node data set on a digital map background of an indoor space (operation S422). For example, the second direction data may be a Compass variable shown in FIG. 8.

FIG. 12 is a flowchart illustrating in more detail some operations of a multi-path positioning method according to an embodiment of the present disclosure. In operation S4240 of obtaining the fourth positioning data, the fourth positioning data may include the number of cases to be described below.

When the proximity positioning sensor is located in the existing traveling direction (operation S4240-1), the movement path may be changed according to the second direction data changed at the node of the proximity positioning sensor (operation S4241), and fourth-first positioning data may be obtained in a changed section on the changed movement path (operation S4242).

When the proximity positioning sensor is located in the changed section (operation S4240-2), the movement path may be changed according to the second direction data changed at a rotation node adjacent to the node of the proximity positioning sensor at one side of the proximity positioning sensor (operation S4243), and fourth-second positioning data may be obtained between the node of the proximity positioning sensor and a node adjacent to the node of the proximity positioning sensor, at the other side of the proximity positioning sensor (operation 4244).

When the proximity positioning sensor is not located in either the existing traveling direction or the changed section (operation S4240-3), the movement path may be changed according to the second direction data at the closest node on the travelling path of the moving object (operation S4245), and fourth-third positioning data may be obtained in a changed section on the changed movement path (S4246).

Embodiments according to the present disclosure described above may be implemented in the form of a computer program that can be executed on a computer through various components, and such a computer program may be recorded on a computer-readable medium. In this case, the computer-readable medium may store a program executable by a computer. Examples of the computer-readable medium may include magnetic media, such as a hard disk, a floppy disk, and a magnetic tape, optical recording media, such as compact disk-read only memory (CD-ROM) and digital versatile disk (DVD), magneto-optical media, such as a floptical disk, and hardware devices configured to store program instructions, such as ROM, random access memory (RAM), and a flash memory.

The computer program may be a program specially designed and configured for the present disclosure, or program known and usable to those skilled in the art of computer software. Examples of computer programs may include machine language code, such as code generated by a compiler, as well as high-level language code, that is executable by a computer using an interpreter, etc.

As described above, the present disclosure has been described with reference to embodiments illustrated in the drawings, but the embodiments are only examples, and it will be understood by one of ordinary skill in the art that various changes in form and details may be made therein without departing from the spirit and scope of the present disclosure as defined by the following claims.

Accordingly, the true scope of protection of the present disclosure should be determined by the technical idea of the following claims.

**Claims**

1. An indoor positioning method comprising:

   setting node data including information about a position of a positioning sensor, according to a preset rule, on a movement path on which a moving object is movable with respect to an indoor space;
   obtaining first positioning data for determining a first section, in which the moving object is currently located, by using at least one of the node data, first sensing data obtained through a sensor unit provided in the moving object, and second sensing data obtained through a positioning sensor provided in the indoor space;
   determining whether the first positioning data satisfies a preset reference value for a boundary node defining the first section; and
   determining positioning data subsequent to the first positioning data, based on at least one of the node data, whether the first positioning data satisfies the preset reference value, and whether the moving object rotates at the boundary node.

2. The indoor positioning method of claim 1, wherein, when it is determined that the first positioning data does not satisfy the preset reference value, the determining of the subsequent positioning data includes calculating second positioning data regarding a position between the boundary nodes by calculating a boundary coordinate value of boundary node data of the node data and the intensity of the second sensing data, wherein the intensity of the second sensing data corresponds to signal strength of the positioning sensor.

3. The indoor positioning method of claim 1, wherein, when it is determined that the first positioning data satisfies the preset reference value, or when it is determined that the boundary node is a rotation node based on the node data, the determining of the subsequent positioning data includes:

    determining rotation information about whether the moving object rotates at the boundary node and the direction of the rotation at the boundary node, based on at least one of the node data and direction data calculated based on the first sensing data; and
    calculating the subsequent positioning data for the section subsequent to the first section on the movement path of the moving object according to a result of the determination.

4. The indoor positioning method of claim 3, wherein the determining of the rotation information includes:

    calculating first direction data about a rotation degree of the moving object by using the first sensing data; and
    determining second direction data about the rotation direction by associating the first direction data with the node data,
    wherein the first direction data is calculated by performing a fusion operation on a first-first coordinate value of first-first sensing data and a first-second coordinate value of first-second sensing data.

5. The indoor positioning method of claim 3, wherein, when it is determined that the first positioning data satisfies the preset reference value, and when it is determined that the boundary node is not a rotation node, the determining of the subsequent positioning data further includes:

    updating the first positioning data with one of the boundary nodes; and
    obtaining third-first positioning data for a second section on the extension of an existing heading line of the moving object,
    wherein the second section is the section adjacent to the first section.

6. The indoor positioning method of claim 3, wherein, when it is determined that a boundary node of the first section does not satisfy the reference value, when it is determined that a node satisfying the reference value is another node other than the boundary node of the first section, and when it is determined that the other node is not a rotation node, the determining of the subsequent positioning data further includes:

    updating the first positioning data with the other node data; and
    obtaining third-second positioning data for a third section on an extension line in an existing traveling direction of the moving object,
    wherein the other node is a boundary node of the third section.

7. The indoor positioning method of claim 4, wherein, when it is determined that the moving object rotates in the determining of the rotation information, the determining of the subsequent positioning data further includes:

    determining a proximity positioning sensor by using the second sensing data; and
    obtaining fourth positioning data for a changed path in a direction different from the existing traveling direction of the moving object according to a position of the proximity positioning sensor.

8. The indoor positioning method of claim 7, wherein the fourth positioning data includes:

    fourth-first positioning data obtained in a section that is changed according to the second direction data when the proximity positioning sensor is located in the existing traveling direction;
    fourth-second positioning data obtained between a node of the proximity positioning sensor and a node adjacent to the node of the proximity positioning sensor when the proximity positioning sensor is located in the changed section; and

fourth-third positioning data obtained in a section that is changed from a node closest to the existing travelling direction when the proximity positioning sensor is not located in either of the existing travelling direction and the changed section.

9.  An indoor positioning device comprising:

a control unit; and a sensor unit,
wherein the control unit is configured to:

set node data including information about a position of a positioning sensor, according to a preset rule, on a movement path on which a moving object is movable with respect to an indoor space;
obtain first positioning data for determining a first section, in which the moving object is currently located, by using at least one of the node data, first sensing data obtained through the sensor unit, and second sensing data obtained through a positioning sensor provided in the indoor space;
determine whether the first positioning data satisfies a preset reference value for a boundary node defining the first section; and
determine positioning data subsequent to the first positioning data, based on at least one of the node data, whether the first positioning data satisfies the preset reference value, and whether the moving object rotates at the boundary node.

10.  The indoor positioning device of claim 9, wherein, when the control unit determines that the first positioning data does not satisfy the preset reference value, the control unit is further configured to calculate second positioning data regarding a position between the boundary nodes by calculating a boundary coordinate value of boundary node data of the node data and a intensity of the second sensing data, wherein the intensity of the second sensing data corresponds to signal strength of the positioning sensor.

11.  The indoor positioning device of claim 9, wherein, when the control unit determines that the first positioning data satisfies the preset reference value, or determines that the boundary node is a rotation node based on the node data, the control unit is further configured to:

determine rotation information about whether the moving object rotates at the boundary node and the direction of the rotation at the boundary node, based on at least one of the node data and direction data calculated based on the first sensing data; and
calculate the subsequent positioning data for a section subsequent to the first section on a movement path of the moving object according to a result of the determination.

12.  The indoor positioning device of claim 11, wherein the control unit is further configured to:

calculate first direction data about a rotation degree of the moving object by using the first sensing data; and
determine second direction data about the rotation direction by associating the first direction data with the node data and determine the rotation information,
wherein the first direction data is calculated by performing a fusion operation on a first-first coordinate value of first-first sensing data and a first-second coordinate value of first-second sensing data.

13.  The indoor positioning device of claim 11, wherein, when the control unit determines that the first positioning data satisfies the preset reference value, and determines that the boundary node is not a rotation node, the control unit is further configured to:

update the first positioning data with one of the boundary nodes; and
obtain third-first positioning data for a second section on the extension of an existing heading line of the moving object,
wherein the second section is the section adjacent to the first section.

14.  The indoor positioning device of claim 11, wherein, when the control unit determines that a boundary node of the first section does not satisfy the reference value, determines a node that satisfies the reference value as a node other than the boundary node of the first section, and determines that the other node is not a rotation node, the control unit is further configured to:

update the first positioning data with the other node data; and
obtain third-second positioning data for a third section on an extension line in an existing traveling direction of the moving object,
wherein the other node is a boundary node of the third section.

15. The indoor positioning device of claim 12, wherein, when the control unit determines that the moving object rotates when determining the rotation information, the control unit is further configured to:

determine a proximity positioning sensor by using the second sensing data; and
obtain fourth positioning data for a changed path in a direction different from the existing traveling direction of the moving object according to a position of the proximity positioning sensor.

16. The indoor positioning device of claim 15, wherein the fourth positioning data includes:

fourth-first positioning data obtained in a section that is changed according to the second direction data when the proximity positioning sensor is located in the existing traveling direction;
fourth-second positioning data obtained between a node of the proximity positioning sensor and a node adjacent to the node of the proximity positioning sensor when the proximity positioning sensor is located in the changed section; and
fourth-third positioning data obtained in a section that is changed from a node closest to the existing travelling direction when the proximity positioning sensor is not located in either of the existing travelling direction and the changed section.

FIG. 1

# FIG. 2

# FIG. 3

140

141
ACCELEROMETER

142
GYROSCOPE

143
MAGNETIC FIELD SENSOR

# FIG. 4

EP 4 249 937 A1

# FIG. 5

210    250    220    20

$(X_1,Y_1)$ N1    ▷ $(X,Y)$    N2 $(X_2,Y_2)$

d1    d2

D2

D3 ⊙ → D1

# FIG. 6

# FIG. 7

EP 4 249 937 A1

FIG. 8

# FIG. 9

START

SET NODE DATA INCLUDING INFORMATION ABOUT POSITION OF POSITIONING SENSOR ON MOVEMENT PATH ON WHICH MOVING OBJECT IS MOVABLE — S100

OBTAIN FIRST POSITIONING DATA OF MOVING OBJECT BY USING AT LEAST ONE OF NODE DATA, FIRST SENSING DATA, AND SECOND SENSING DATA — S200

(A)

DETERMINE WHETHER FIRST POSITIONING DATA SATISFIES PRESET REFERENCE VALUE FOR BOUNDARY NODE DEFINING FIRST SECTION — S300

DETERMINE POSITIONING DATA SUBSEQUENT TO FIRST POSITIONING DATA BASED ON AT LEAST ONE OF NODE DATA, WHETHER FIRST POSITIONING DATA SATISFIES PRESET REFERENCE VALUE, AND WHETHER MOVING OBJECT ROTATES AT BOUNDARY NODE — S400

(B)

END

# FIG. 10

EP 4 249 937 A1

# FIG. 11

C     <u>S420</u>

CALCULATING FIRST DIRECTION DATA ABOUT
A ROTATION AMOUNT OF THE MOVING OBJECT
BY USING THE FIRST SENSING DATA — S421

DETERMINING SECOND DIRECTION DATA
ABOUT THE ROTATION DIRECTION BY
ASSOCIATING THE FIRST DIRECTION DATA
WITH THE NODE DATA — S422

D

## FIG. 12

S4240

E

S4240-1

S4241
CHANGE MOVEMENT PATH ACCORDING TO SECOND DIRECTION DATA AT NODE OF PROXIMITY POSITIONING SENSOR

S4240-2

S4240-3

S4243
CHANGE MOVEMENT PATH ACCORDING TO SECOND DIRECTION DATA AT ROTATION NODE ADJACENT TO NODE OF PROXIMITY POSITIONING SENSOR AT ONE SIDE OF PROXIMITY POSITIONING SENSOR

S4242
OBTAIN FOURTH-FIRST POSITIONING DATA ON CHANGED PATH

S4244
OBTAIN FOURTH-SECOND POSITIONING DATA BETWEEN NODE OF PROXIMITY POSITIONING SENSOR AND NODE ADJACENT TO NODE OF PROXIMITY POSITIONING SENSOR AT OTHER SIDE OF PROXIMITY POSITIONING SENSOR

S4245
CHANGE MOVEMENT PATH ACCORDING TO SECOND DIRECTION DATA AT CLOSEST NODE ON TRAVELING PATH OF MOVING OBJECT

S4246
OBTAIN FOURTH-THIRD POSITIONING DATA ON CHANGED MOVEMENT PATH

B

EP 4 249 937 A1

## INTERNATIONAL SEARCH REPORT

| International application No. |
|---|
| **PCT/KR2021/013894** |

### A. CLASSIFICATION OF SUBJECT MATTER

**G01S 5/02**(2010.01)i

According to International Patent Classification (IPC) or to both national classification and IPC

### B. FIELDS SEARCHED

Minimum documentation searched (classification system followed by classification symbols)

G01S 5/02(2010.01); G01C 21/26(2006.01); G01C 21/30(2006.01); G01C 22/00(2006.01); G01S 1/68(2006.01); G08G 1/0969(2006.01); H04W 4/02(2009.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 노드 데이터(node data), 이동 객체(moving object), 실내(indoor), 측위(positioning), 경계 노드(border node)

### C. DOCUMENTS CONSIDERED TO BE RELEVANT

| Category* | Citation of document, with indication, where appropriate, of the relevant passages | Relevant to claim No. |
|---|---|---|
| Y | JP 2018-059819 A (ZENRIN DATACOM CO., LTD. et al.) 12 April 2018 (2018-04-12) See paragraphs [0012], [0019], [0022]-[0023], [0027], [0033]-[0037] and [0043]-[0044]; claim 4; and figures 1-2. | 1,9 |
| A | | 2-8,10-16 |
| Y | KR 10-2016-0079742 A (NAVER BUSINESS PLATFORM CORP.) 06 July 2016 (2016-07-06) See paragraphs [0010] and [0047]; and figure 1. | 1,9 |
| A | KR 10-2012-0134435 A (HYUNDAI MOBIS CO., LTD.) 12 December 2012 (2012-12-12) See paragraphs [0022]-[0028]; and figure 1. | 1-16 |
| A | KR 10-2017-0018662 A (FOUNDATION OF SOONGSIL UNIVERSITY-INDUSTRY COOPERATION) 20 February 2017 (2017-02-20) See paragraphs [0026]-[0029]; and figure 1. | 1-16 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 January 2022** | **12 January 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2021/013894** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2169842 B1 (INDUSTRY ACADEMIC COOPERATION FOUNDATION OF YEUNGNAM UNIVERSITY) 27 October 2020 (2020-10-27) See paragraphs [0118]-[0121]; and figure 2. | 1-16 |

Form PCT/ISA/210 (second sheet) (July 2019)

## INTERNATIONAL SEARCH REPORT
### Information on patent family members

| International application No. |
| --- |
| **PCT/KR2021/013894** |

| Patent document cited in search report | | | Publication date (day/month/year) | Patent family member(s) | | | Publication date (day/month/year) |
| --- | --- | --- | --- | --- | --- | --- | --- |
| JP | 2018-059819 | A | 12 April 2018 | JP | 6796985 | B2 | 09 December 2020 |
| KR | 10-2016-0079742 | A | 06 July 2016 | JP | 2016-126002 | A | 11 July 2016 |
| | | | | JP | 6216760 | B2 | 18 October 2017 |
| | | | | KR | 10-1634879 | B1 | 29 June 2016 |
| | | | | KR | 10-2152941 | B1 | 07 September 2020 |
| | | | | US | 10064008 | B2 | 28 August 2018 |
| | | | | US | 10448207 | B2 | 15 October 2019 |
| | | | | US | 2016-0192140 | A1 | 30 June 2016 |
| | | | | US | 2018-0317048 | A1 | 01 November 2018 |
| KR | 10-2012-0134435 | A | 12 December 2012 | None | | | |
| KR | 10-2017-0018662 | A | 20 February 2017 | KR | 10-1751731 | B1 | 29 June 2017 |
| | | | | US | 2017-0048678 | A1 | 16 February 2017 |
| | | | | US | 9949090 | B2 | 17 April 2018 |
| KR | 10-2169842 | B1 | 27 October 2020 | None | | | |

Form PCT/ISA/210 (patent family annex) (July 2019)